# FASCICULE DE BREVET EUROPEEN

(11) **EP 1 678 023 B1**
(45) Date de publication et mention de la délivrance du brevet: **30.03.2011**
(21) Numéro de dépôt: 04805781.4
(22) Date de dépôt: 27.10.2004
(51) Int. Cl.: B60T 11/34

(54) **DISPOSITIF LIMITEUR DE PRESSION POUR CIRCUIT HYDRAULIQUE DE FREINAGE D UN VEHICULE**
DRUCKBEGRENZUNGSVORRICHTUNG FÜR EINEN HYDRAULISCHEN BREMSKREISLAUF EINES FAHRZEUGS
PRESSURE LIMITING DEVICE FOR A HYDRAULIC BRAKING CIRCUIT OF A VEHICLE

(30) Priorité: 29.10.2003 FR 0312952
(43) Date de publication de la demande: 12.07.2006
(73) Titulaire: Beringer SAS, 69220 Saint Jean d'Ardières (FR)
(72) Inventeur: BERINGER, Gilbert, 42940 Chatelneuf (FR)
(74) Mandataire: Thivillier, Patrick
(86) Numéro de dépôt international: PCT/FR2004/050538
(87) Numéro de publication internationale: WO 2005/042324

(56) Documents cités:
- EP-A- 0 370 230
- DE-A- 2 836 453
- DE-A- 2 853 718
- DE-A- 3 236 321
- GB-A- 1 081 997

## Description

L'invention se rattache au secteur technique des circuits de commande de freinage pour tous types de véhicules, notamment du type automobile et motocyclette.

Comme indiqué, l'invention trouve une application particulièrement avantageuse pour un circuit hydraulique de freinage de véhicule où il est nécessaire d'exercer sur un organe actionneur du type poignée ou pédale, un effort pour délivrer une certaine pression susceptible d'agir sur les organes de freinage. Une telle application ne doit toutefois pas être considérée comme rigoureusement limitative.

On rappelle, d'une manière parfaitement connue pour un homme du métier, que les organes de freinage, notamment les étriers, sont équipés de plaquettes commandées par des pistons reliés hydrauliquement à un maître cylindre commandé par un ou des organes actionneurs manoeuvrables à la main ou au pied, en fonction du type de véhicule considéré. On sait par ailleurs que l'action de freinage, qui correspond à une décélération, provoque un transfert des masses à l'avant du véhicule, de sorte que l'arrière du véhicule a tendance à être délesté et est susceptible de provoquer un décrochage, comme cela peut être le cas dans les véhicules du type motocyclette.

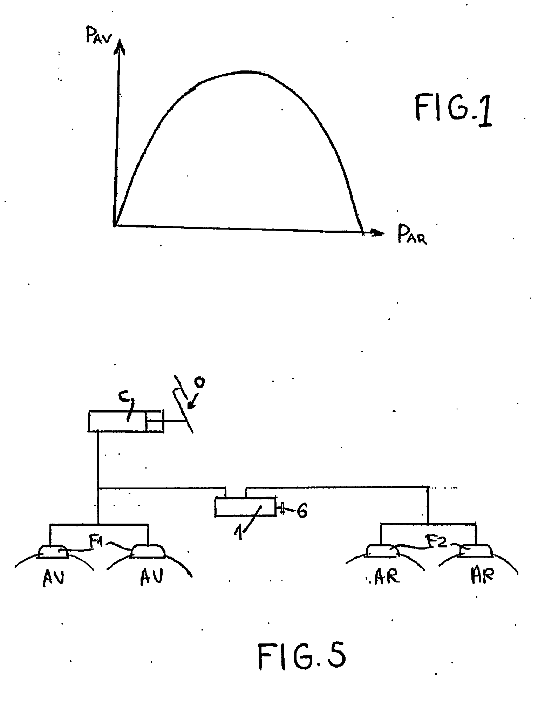

On renvoie à la figure 1 qui montre une courbe d'iso adhérence correspondant à un freinage théorique idéal en fonction de la pression exercée sur la ou les roues avant (en ordonné) par rapport à la pression exercée sur la ou les roues arrière (en abscisse). Cette courbe montre qu'il y a une montée en pression au niveau des organes de freinage de la ou des roues arrière, laquelle montée en pression est suivie d'une descente progressive correspondant au relâchement de la pression au niveau desdits organes de freinage.

En réalité, lorsque l'utilisateur agit sur les organes actionneurs, il y a une montée en pression qui se traduit par un dépassement de la courbe théorique qui va provoquer un blocage de la ou des roues arrière.

Pour tenter de remédier à ces inconvénients, on a proposé des limiteurs de pression dont la fonction première est de limiter la montée en pression, mais qui ne permettent pas de la faire redescendre, d'une manière progressive, dans le circuit de commande des organes de freinage de la ou des roues arrière. Tout au plus, ces limiteurs de pression permettent de maintenir cette pression constante selon un palier qui apparaît au maximum de la courbe théorique. De plus, de tels limiteurs sont sensibles à la vitesse de montée en pression. Il y a donc des dispersions importantes de la pression de consigne en fonction de la vitesse de montée en pression dans le circuit. Cet état de la technique peut être illustré par l'enseignement du document DE 2.836.453.

L'invention s'est fixée pour but de remédier à ces inconvénients, de manière simple, sûre, efficace et rationnelle.

Le problème que se propose de résoudre l'invention est, d'une part, de s'affranchir de la variation de vitesse de montée en pression et, d'autre part, de faire redescendre cette pression dans le circuit de freinage de la ou des roues arrière du véhicule considéré.

Pour résoudre un tel problème, il a été conçu et mis au point un dispositif limiteur de pression pour le circuit hydraulique de freinage d'un véhicule, comprenant, d'une manière connue, un carter étanche raccordé hydrauliquement entre les organes de freinage de la ou des roues avant et de la ou des roues arrière,

Le problème posé est résolu par les caractéristiques de la revendication 1.

Avantageusement, le fluide en provenance des organes de freinage de la ou des roues avant, est envoyé dans l'alésage du carter entre les deux têtes de pistons qui délimitent un chambrage annulaire, et est envoyé aux organes de freinage des roues arrière entre l'extrémité de la tête de piston et l'organe d'obturation.

Pour résoudre le problème posé de permettre le libre passage du fluide en direction des organes de freinage de la ou des roues arrière, la tête de piston située du côté de l'organe d'obturation, présente facialement des ergots aptes à prendre appui contre ledit organe d'obturation en position de butée de la bille contre le doigt.

Pour résoudre le problème posé de diminuer la pression dans les organes de freinage de la ou des roues arrière et de faire redescendre une telle pression, l'ensemble corps - pistons est assujetti à un organe élastique monté dans l'alésage du carter et apte à exercer une force de poussée pour plaquer ledit corps contre l'organe d'obturation correspondant au libre passage du fluide, ledit organe élastique étant précontraint à une valeur correspondant à la pression de consigne.

Dans une forme de réalisation préférée, l'organe d'obturation est monté dans l'alésage du carter avec capacité de réglage en translation afin de modifier la précontrainte de l'organe élastique pour modifier d'une manière concomitante, la pression de consigne.

Compte tenu du problème posé à résoudre, d'une manière préférée, la tête de piston, coopérant avec l'organe élastique précontraint, présente un diamètre supérieur à celui de l'autre tête, l'alésage du carter délimitant deux portées internes coaxiales, de diamètres différents et correspondants.

Dans une autre forme de réalisation, la tête de piston, coopérant avec l'organe élastique précontraint, présente un diamètre égal à celui de l'autre tête, l'alésage du carter délimitant une portée interne d'un diamètre correspondant.

L'invention est exposée ci-après plus en détail à l'aide des figures des dessins annexés dans lesquels :
- la figure 1 montre la courbe théorique d'iso adhérence dans le cas d'un freinage idéal ;
- les figures 2, 3 et 4 montrent les courbes obtenues par le dispositif limiteur de pression en comparaison avec la courbe idéale de la figure 1, représentée en traits interrompus ; les différentes courbes obtenues dépendent des diamètres des têtes de pistons du corps mobile ;
- la figure 5 est une vue à caractère purement schématique montrant le montage du dispositif limiteur de pression dans un circuit hydraulique de freinage d'un véhicule ;
- la figure 6 est une vue en coupe longitudinale du dispositif limiteur représenté en position de passage de fluide, lorsque la pression exercée sur les organes de freinage de la ou des roues arrière est inférieure à une pression de consigne sélectionnée ;
- la figure 7 est une vue correspondant à la figure 6 lorsque la pression exercée sur les organes de freinage de la ou des roues arrière est supérieure à la valeur de pression de consigne sélectionnée.

Le dispositif limiteur de pression selon l'invention comprend un carter étanche (1) de dimensions réduites, susceptible d'être intégré ou rajouté à un circuit hydraulique pour la commande des organes de freinage, Comme le montre la figure 5, le limiteur de pression est raccordé hydrauliquement entre les organes de freinage (F1) de la ou des roues avant (AV) et les organes de freinage (F2) de la ou des roues arrière (AR). D'une manière classique et parfaitement connue pour un homme du métier, les organes de freinage (F1) et (F2) sont asservis par un maître cylindre (C) assujetti à l'organe actionneur (O) qui peut être constitué par une pédale, une poignée ou autre, en fonction du type de véhicule à équiper.

Le carter (1) constitue un ensemble compact et autonome sous forme d'un bloc sensiblement parallélépipédique. Le carter (1) présente, dans son épaisseur, des canaux (1a) et (1b) en communication avec une portée de raccordement (1a1), (1b1), pour être raccordé au circuit hydraulique de freinage. Ce raccordement peut être effectué, par exemple, au moyen de flexibles. Le canal (1a) est en communication avec le circuit hydraulique des organes de freinage (F1) de la ou des roues avant (AV), tandis que le canal (1b) est en communication avec le circuit hydraulique des organes de freinage (F2) de la ou des roues arrière (AR). Les canaux (1a) et (1b) sont en communication avec un alésage coaxial (1c) du carter (1). Bien évidemment, le carter (1) présente des agencements (1d) et (1e) pour la fixation par vis ou autrement sur une partie du véhicule considéré.

Selon une caractéristique à la base de l'invention, l'alésage (1c) du carter (1) reçoit, avec capacité de coulissement étanche, un corps cylindrique creux (2) présentant, à chaque extrémité, une tête de piston (2a) et (2b). D'une manière importante, comme il sera expliqué dans la suite de la description, l'ensemble du corps - pistons (2) est assujetti à un organe élastique sous forme d'un ressort précontraint (3), monté dans le fond de l'alésage (1c).

Le corps cylindrique (2) présente un alésage (2c) formé coaxialement et débouchant de la tête de piston (2b), du côté du canal (1b) raccordé au circuit hydraulique des organes de freinage (F2) de la ou des roues arrière (AR). Cet alésage (2c) est en communication, par un orifice (2d), avec le fluide en provenance des organes de freinage (F1) de la ou des roues avant (AV). Cet alésage (2c) reçoit une bille (4) assujettie à un ressort (5) monté dans le fond dudit alésage (2c). La bille (4) coopère avec un doigt coaxial (6a) que présente un organe d'obturation étanche (6) monté du côté de l'ouverture débouchant de l'alésage (1c).

Lorsque la bille (4) est en contact avec le doigt (6a), elle est écartée de son siège (2e) permettant le libre passage du fluide hydraulique par le canal (1a), l'alésage (2c) et le canal (1b). Inversement, lorsqu'elle n'est plus en contact avec le doigt (6a), la bille (4) est poussée dans le fond de son siège (2e) par le ressort (5) correspondant à la fermeture du circuit en direction des organes de freinage de la ou des roues arrières (AR), comme il sera indiqué dans la suite de la description.

Dans ce but, le fluide en provenance des organes de freinage de la ou des roues avant (AV) est envoyé dans l'alésage (1c) du carter (1), entre les deux têtes de pistons (2a) et (2b) qui délimitent un chambrage annulaire. Le ressort (3), qui est précontraint en fonction de la valeur de la pression de consigne sélectionnée, exerce, sur la tête de piston (2a), une force de poussée apte à faire plaquer le corps cylindrique (2), au niveau de sa tête de piston (2b), contre l'organe d'obturation (6).

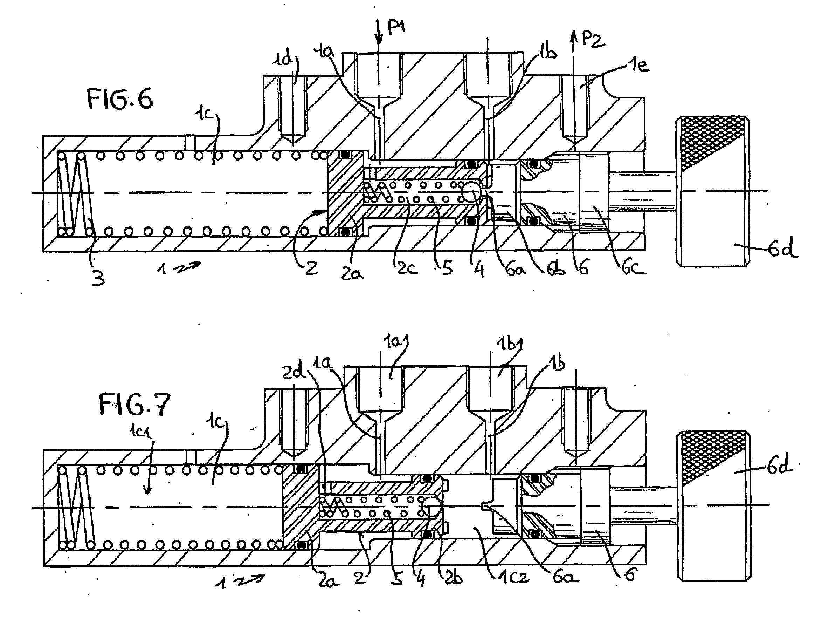

Dans cette position (figure 6), la bille (4) est en contact avec le doigt (6a) de l'organe d'obturation (6), pour dégager son siège (2e), correspondant au libre passage du fluide, par le canal (1a), l'alésage (2c) et le canal (1b). A noter que la tête de piston (2b) présente facialement des ergots (2b1) aptes à prendre appui contre la tête (6b) de l'organe d'obturation (6), en position de butée de la bille (4) contre le doigt (6a), pour le libre passage du fluide hydraulique.

Il convient d'analyser le fonctionnement du dispositif limiteur de pression selon l'invention. Lorsque la pression (P1) exercée sur les organes de freinage de la ou des roues avant augmente, correspondant à un dépassement de la valeur de consigne présélectionnée, c'est-à-dire de la précontrainte du ressort (3), le corps (2) a tendance à reculer, en comprimant ledit ressort (3) (figure 7). La bille (4) n'est plus maintenue par le doigt (6a), de sorte qu'elle vient obturer le siège (2e) sous l'effet de la poussée du ressort (5). Dans cette position (figure 7), la pression (P2) exercée sur les organes de freinage (F2) de la ou des roues arrière (AR), décroît d'une manière proportionnelle à une montée en pression au niveau des organes de freinage de la ou des roues avant.

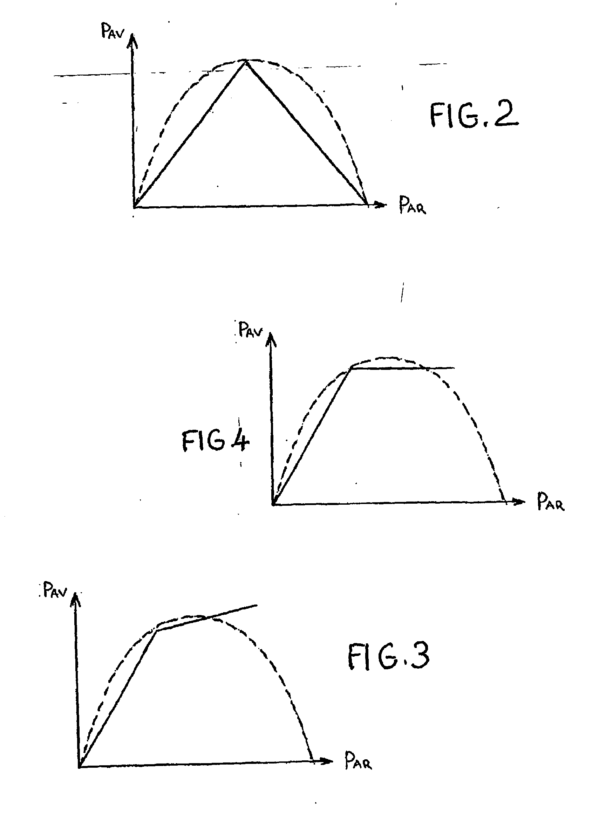

A partir de cette conception de base et selon une forme de réalisation préférée, la tête du piston (2a) présente un diamètre supérieur à celui de l'autre tête (2b). Dans ce cas, l'alésage (1c) du carter délimite deux portées internes (1c1) et (1c2) disposées coaxialement en étant de diamètres différents et correspondant à ceux desdits pistons. Dans ce cas, on obtient une courbe proche de la courbe d'iso adhérence théorique (figure 2). Il s'ensuit, dans un premier temps, une montée en pression du fluide circulant normalement dans le limiteur de débit par le canal (1a), l'alésage (2c) et le canal (1b), puis, lorsque la pression de consigne est atteinte, la pression décroît dans les organes de freinage de la ou des roues arrière d'une manière proportionnelle à la montée en pression dans les organes de freinage de la ou des roues avant.

Lorsque le diamètre de la tête du piston (2a) est inférieur au diamètre de la tête de piston (2b), on obtient une courbe conforme à celle illustrée à la figure 3.

Enfin, lorsque le diamètre de la tête de piston (2a) est égal au diamètre de la tête de piston (2b), on obtient une courbe conforme à celle illustré à la figure 4.

Bien évidemment, dans ce cas, l'alésage (1c) du carter délimite une portée interne de diamètre égal sur toute sa longueur.

D'une manière avantageuse, l'organe d'obturation (6) est monté dans l'alésage (1c) du carter avec capacité de réglage en translation afin de modifier, à volonté, la précontrainte du ressort (3) pour modifier, d'une manière concomitante, la pression de consigne. Par exemple, l'organe d'obturation (6) est constitué par un corps cylindrique présentant une portée filetée (6c) apte à être vissée dans un taraudage (1f) formé au niveau de l'entrée de l'alésage (1c), Le corps (6) est assujetti à une molette de manoeuvre (6d).

Les avantages ressortent bien de la description, en particulier on souligne et on rappelle que le dispositif limiteur de pression selon l'invention, permet de s'affranchir de la variation de la vitesse de montée en pression et permet de faire redescendre cette pression dans le circuit des organes de freinage des roues arrière en fonction d'une pression de consigne présélectionnée.

## Revendications

1. Dispositif limiteur de pression pour circuit hydraulique de freinage d'un véhicule, comprenant un carter étanche (1) raccordé hydrauliquement entre les organes de freinage de la ou des roues avant et de la ou des roues arrière, **caractérisé en ce** ledit carter comprend un corps cylindrique creux (2) présentant, à chaque extrémité, une tête de piston (2a) et (2b) montée coulissante, d'une manière étanche, dans un alésage (1c) du carter (1), ledit corps (2) présentant des agencements constitués par un alésage (2c) formé coaxialement et débouchant de l'une des têtes de pistons (2b), du côté du raccordement au circuit hydraulique des organes de freinage de la ou des roues arrière, ledit alésage (2c), en communication avec le fluide en provenance des organes de freinage des roues avant, recevant une bille (4) assujettie à un ressort (5) et coopérant avec un doigt coaxial (6a) que présente un organe d'obturation étanche (6) monté dans l'alésage (1c) du carter (1), de manière à permettre pour le libre passage du fluide depuis les organes de freinage de la ou des roue(s) avant jusqu'aux organes de freinage de la ou des roues arrière et jusqu'à une pression de consigne réglable et, lorsque la pression de consigne est atteinte, le déplacement de l'ensemble corps-pistons, de manière à empêcher le passage du fluide en direction des organes de freinage de la ou des roues arrière, de sorte que la pression décroît dans les organes de freinage de la ou des roues arrière, d'une manière proportionnelle, à une montée en pression dans les organes de freinage de la ou des roue(s) avant.

2. Dispositif selon la revendication 1, **caractérisé en ce que** le fluide en provenance des organes de freinage de la ou des roues avant est envoyé dans l'alésage (1c) du carter (1) entre les deux têtes de pistons (2a) et (2b) qui délimitent un chambrage annulaire, et est envoyé aux organes de freinage de la ou des roues arrière entre l'extrémité de la tête de piston (2b) et l'organe d'obturation (6).

3. Dispositif selon l'une quelconque des revendications 1 et 2, **caractérisé en ce que** la tête de piston (2b) située du côté de l'organe d'obturation (6) présente, facialement, des ergots (2b1) aptes à prendre appui contre ledit organe d'obturation (6) en position de butée de la bille (4) contre le doigt (6a) pour le libre passage du fluide.

4. Dispositif selon l'une quelconque des revendications 1, 2 et 3, **caractérisé en ce que** l'ensemble du corps - pistons (2) est assujetti à un organe élastique (3) monté dans l'alésage (1c) du carter (1) et apte à exercer une force de poussée pour plaquer ledit corps (2) contre l'organe d'obturation (6) correspondant au libre passage du fluide, ledit organe élastique (3) étant précontraint à une valeur correspondant à la pression de consigne.

5. Dispositif selon l'une quelconque des revendications 1, 2, 3 et 4, **caractérisé en ce que** l'organe d'obturation (6) est monté dans l'alésage (1c) du carter (1) avec capacité de réglage en translation afin de modifier la précontrainte de l'organe élastique (3) pour modifier, d'une manière concomitante, la pression de consigne.

6. Dispositif selon l'une quelconque des revendications 1, 2, 3, 4, et 5 , **caractérisé en ce que** la tête de piston (2a), coopérant avec l'organe élastique précontraint (3), présente un diamètre supérieur à celui de l'autre tête (2b), l'alésage (1c) du carter délimitant deux portées internes coaxiales (1c1) et (1c2), de diamètres différents et correspondants.

7. Dispositif selon l'une quelconque des revendications 1, 2, 3, 4, et 5 , **caractérisé en ce que** la tête de piston (2a), coopérant avec l'organe élastique précontraint (3), présente un diamètre inférieur à celui de l'autre tête (2b), l'alésage (1c) du carter (1) délimitant deux portées internes coaxiales (1c1) - (1c2), de diamètres différents et correspondants.

8. Dispositif selon la revendication 1, **caractérisé en ce que** la tête de piston (2a), coopérant avec l'organe élastique précontraint, présente un diamètre égal à celui de l'autre tête (2b), l'alésage (1c) du carter (1) délimitant une portée interne d'un diamètre correspondant.

## Claims

1. Pressure limiting device for a hydraulic braking circuit of a vehicle comprising a leak-tight housing (1) hydraulically connected between the braking elements of the front and rear wheel(s), **characterised in that** said housing comprises a hollow cylindrical body (2) having, at each end, a piston head (2a) and (2b) mounted to slide, in a leak-tight way, in a bore (1c) of the housing (1), said body (2) having fittings constituted by a bore (2c) formed coaxially and emerging from one of the piston heads (2b), towards the connection to the hydraulic circuit of the braking elements of the rear wheel(s), said bore (2c), in communication with the fluid coming from the braking elements of the front wheels, accommodating a bead (4) dependent upon a spring (5) and engaging with a coaxial finger (6a) provided on a leak-tight sealing element (6) mounted in the bore (1c) of the housing (1), so that the fluid is able to flow freely from the braking elements of the front wheel(s) to the braking elements of the rear wheel(s) until an adjustable set pressure is obtained and that, when the set pressure is reached, the body-piston assembly is able to move, in order to prevent the fluid from flowing in the direction of the braking elements of the rear wheel(s), with the result that the pressure is reduced in the braking elements of the rear wheel(s), in a manner which is proportional to a pressure increase in the braking elements of the front wheel(s).

2. Device as claimed in claim 1, **characterised in that** the fluid coming from the braking elements of the front wheel(s) is sent in the bore (1c) of the housing (1) between the two piston heads (2a) and (2b) which define an annular counterbore, and is sent to the braking elements of the rear wheel(s) between the end of the piston head (2b) and the sealing element (6).

3. Device as claimed in any one of claims 1 and 2, **characterised in that** the piston head (2b) towards the sealing element (6) has, facially, lugs (2b1) capable of pressing against said sealing element (6) when the bead (4) is stopped against the finger (6a) so that the fluid is able to flow freely.

4. Device as claimed in any one of claims 1, 2 and 3, **characterised in that** the body-piston assembly (2) is dependent upon a resilient element (3) mounted in the bore (1c) of the housing (1) and capable of exerting a thrust force in order to pin said body (2) against the sealing element (6) corresponding to the free flow of the fluid, said resilient element (3) being pre-stressed to a value corresponding to the set pressure.

5. Device as claimed in any one of claims 1, 2, 3 and 4, **characterised in that** the sealing element (6) is mounted in the bore (1c) of the housing (1) with capability for adjustment in translatory motion in order to modify the prestressing of the resilient element (3) in order to modify, in a concomitant manner, the set pressure.

6. Device as claimed in any one of claims 1, 2, 3, 4 and 5, **characterised in that** the piston head (2a), engaging with the pre-stressed resilient element (3), is larger in diameter than the other head (2b), the bore (1c) of the housing defining two internal coaxial bearing surfaces (1c1) and (1c2), of different and corresponding diameters.

7. Device as claimed in any one of claims 1, 2, 3, 4 and 5, **characterised in that** the piston head (2a), engaging with the pre-stressed resilient element (3), is smaller in diameter than the other head (2b), the bore (1c) of the housing (1) defining two internal coaxial bearing surfaces (1c1) - (1c2), of different and corresponding diameters.

8. Device as claimed in claim 1, **characterised in that** the piston head (2a), engaging with the pre-stressed resilient element, is equal in diameter to the other head (2b), the bore (1c) of the housing (1) defining an internal bearing surface of corresponding diameter.

## Patentansprüche

1. Druckbegrenzungsvorrichtung für Bremshydraulikkreis eines Fahrzeugs mit einem dichten Gehäuse (1), das hydraulisch zwischen den Bremsorganen des/der Vorderrades/Vorderräder und des/der Hinterrades/Hinterräder angeschlossen ist, **dadurch gekennzeichnet, dass** das besagte Gehäuse einen zylindrischen Hohlkörper (2) umfasst, der an jedem Ende einen Kolbenkopf (2a und 2b) aufweist, der dicht und gleitend in einer Bohrung (1c) des Gehäuses (1) angebracht ist, wobei der besagte Körper (2) Vorkehrungen aufweist, die aus einer Bohrung (2c) bestehen, die koaxial ausgebildet ist und auf der Seite des Anschlusses der Bremsorgane des/der Hinterrades/Hinterräder aus einem der Kolbenköpfe (2b) mündet, wobei die besagte Bohrung (2c), die mit dem Medium aus den Bremsorganen der Vorderräder in Verbindung steht, eine Kugel (4) aufnimmt, die von einer Feder (5) abhängig ist und mit einem koaxialen Stift (6a) eines in der Bohrung (1c) des Gehäuses (1) angebrachten dichten Verschlussorgans (6) so zusammenwirkt, dass das Medium von den Bremsorganen des/der Vorderrades/Vorderräder bis zu den Bremsorganen des/der Hinterrades/Hinterräder bis zu einem einstellbaren Solldruck ungehindert durchlaufen kann und, wenn der Solldruck erreicht ist, die Verschiebung der Baueinheit Körper/Kolben in der Weise ermöglicht wird, dass der Durchlauf des Mediums in Richtung der Bremsorgane des/der Hinterrades/Hinterräder verhindert wird, so dass der Druck in den Bremsorganen des/der Hinterrades/Hinterräder proportional zu einem Druckanstieg in den Bremsorganen des/der Vorderrades/Vorderräder abnimmt.

2. Vorrichtung nach Anspruch 1, **dadurch gekennzeichnet, dass** das von den Bremsorganen des/der Vorderrades/Vorderräder kommende Medium in die Bohrung (1c) des Gehäuses (1) zwischen den beiden Kolbenköpfen (2a und 2b), die eine ringförmige Ansenkung begrenzen, und zu den Bremsorganen des/der Hinterrades/Hinterräder zwischen dem Endstück des Kolbenkopfes (2b) und dem Verschlussorgan (6) geschickt wird.

3. Vorrichtung nach einem der Ansprüche 1 und 2, **dadurch gekennzeichnet, dass** der auf der Seite des Verschlussorgans (6) gelegene Kolbenkopf (2b) auf der Vorderseite Nasen (2b1) aufweist, die geeignet sind, in Anschlagposition der Kugel (4) am Stift (6a) für den ungehinderten Durchfluss des Mediums am besagten Verschlussorgan (6) aufzuliegen.

4. Vorrichtung nach einem der Ansprüche 1, 2 und 3, **dadurch gekennzeichnet, dass** die Baueinheit Körper/Kolben (2) von einem elastischen Bauteil (3) abhängt, das in der Bohrung (1c) des Gehäuses (1) angebracht und geeignet ist, eine Schubkraft auszuüben, um den besagten Körper (2) gegen das Verschlussorgan (6) zu drücken, was dem freien Durchfluss des Mediums entspricht, wobei das besagte elastische Bauteil (3) auf einen dem Solldruck entsprechenden Wert vorgespannt ist.

5. Vorrichtung nach einem der Ansprüche 1, 2, 3 und 4, **dadurch gekennzeichnet**, das das Verschlussorgan (6) in der Bohrung (1c) des Gehäuses (1) in der Translationsbewegung verstellbar angebracht ist, um die Vorspannung des elastischen Bauteils (3) und **dadurch** gleichzeitig den Solldruck zu ändern.

6. Vorrichtung nach einem der Ansprüche 1, 2, 3, 4 und 5, **dadurch gekennzeichnet, dass** der mit dem vorgespannten elastischen Bauteil (3) zusammenwirkende Kolbenkopf (2a) einen höheren Durchmesser als der andere Kopf (2b) aufweist, wobei die Bohrung (1c) des Gehäuses zwei koaxiale interne Auflageflächen (1c1 und 1c2) mit entsprechenden verschiedenen Durchmessern begrenzt.

7. Vorrichtung nach einem der Ansprüche 1, 2, 3, 4 und 5, **dadurch gekennzeichnet, dass** der mit dem vorgespannten elastischen Bauteil (3) zusammenwirkende Kolbenkopf (2a) einen geringeren Durchmesser als der andere Kopf (2b) aufweist, wobei die Bohrung (1c) des Gehäuses (1) zwei koaxiale interne Auflageflächen (1c1 und 1c2) mit entsprechenden verschiedenen Durchmessern begrenzt.

8. Vorrichtung nach Anspruch 1, **dadurch gekennzeichnet, dass** der mit dem vorgespannten elastischen Bauteil zusammenwirkende Kolbenkopf (2a) den gleichen Durchmesser wie der andere Kopf (2b) aufweist, wobei die Bohrung (1c) des Gehäuses (1) eine interne Auflagefläche mit einem entsprechenden Durchmesser begrenzt.
